# FASCICULE DE BREVET EUROPEEN

(11) **EP 1 974 522 B1**
(45) Date de publication et mention de la délivrance du brevet: **17.10.2012**
(21) Numéro de dépôt: 06847173.9
(22) Date de dépôt: 19.12.2006
(51) Int. Cl.: H04L 29/06

(54) **Serveur, client et procédé pour gérer des requetes DNSSEC**
Server, Client und Verfahren zur Verwaltung von DNSSEC-Anforderungen
Server, client and method for managing DNSSEC requests

(30) Priorité: 27.12.2005 FR 0554101
(43) Date de publication de la demande: 01.10.2008
(73) Titulaire: FRANCE TELECOM, 75015 Paris (FR)
(72) Inventeur: MIGAULT, Daniel, F-92130 Issy Les Moulineaux (FR); COMBES, Jean-Michel, F-92130 Issy Les Moulineaux (FR); DUSERRE, Anne-Sophie, F-92400 Courbevoie (FR)
(74) Mandataire: Delumeau, François Guy
(86) Numéro de dépôt international: PCT/FR2006/051383
(87) Numéro de publication internationale: WO 2007/074286

(56) Documents cités:
- ARENDS R ET AL: "Protocol Modifications for the DNS Security Extensions; rfc4035.txt" IETF STANDARD, INTERNET ENGINEERING TASK FORCE, mars 2005 (2005-03), XP015041964 cité dans la demande
- WEILER S: "Clarifications and Implementation Notes for DNSSECbis; draft-ietf-dnsext-dnssec-bis-updates-01.tx t" IETF STANDARD-WORKING-DRAFT, INTERNET ENGINEERING TASK FORCE, 23 mai 2005 (2005-05-23), XP015041290
- GIEBEN M: "DNSSEC: The Protocol, Deployment and a Bit of Development" THE INTERNET PROTOCOL JOURNAL, CISCO SYSTEMS INC, vol. 7, no. 2, juin 2004 (2004-06), pages 17-27, XP002398785

## Description

### Arrière-plan de l'invention

La présente invention se rapporte au domaine général des serveurs de domaine (appelés aussi "serveurs de noms de domaines") dans un réseau de télécommunication.

De façon connue, la gestion des noms de domaines dans un réseau est réalisée par l'architecture DNS (en anglais "Domain Name System") définie par la norme RFC 1034 (en anglais "Request For Comments") de l'IETF ("Internet Engineering Task Force").

Cette architecture introduit la notion de "domaine", pour désigner un regroupement de machines sur le réseau.

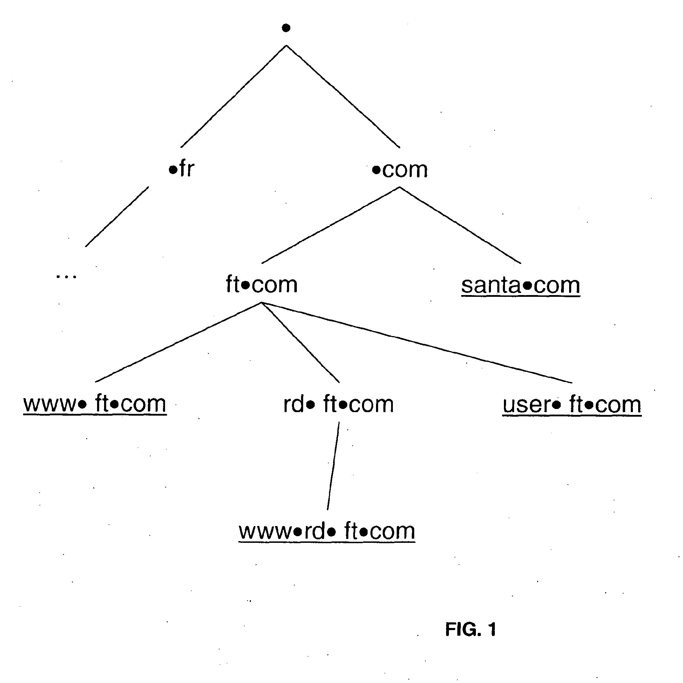

La **figure 1** représente une telle architecture. De façon connue, les domaines ., .fr, .com, ft.com, et rd.ft.com contiennent des sous-domaines.

Par exemple, le domaine ft.com comporte trois sous-domaines, à savoir user.ft.com, rd.ft.com et www.ft.com.

Les domaines qui apparaissent soulignés sur la figure 1 sont appelés "domaines terminaux". De façon connue, un domaine terminal :
- peut représenter une ou plusieurs machines physiques, c'est par exemple le cas du domaine terminal www.rd.ft.com, qui dans cet exemple est un serveur Web ;
- mais peut aussi ne pas représenter de machine physique, c'est par exemple le cas du domaine terminal user.ft.com, qui dans cet exemple est constitué par des informations personnelles de l'utilisateur "user".

De façon connue, un domaine qui comporte au moins un sous-domaine est associé à un serveur de domaine.

Ce serveur de domaine comporte un fichier de zone.

De façon connue, les domaines sont liés entre eux de façon logique, ce qui permet en interrogeant les serveurs de noms de proche en proche (autrement dit, de « père » en « fils »), en commençant par le serveur racine (en anglais "*root serve*"), d'obtenir les données DNS de n'importe quel domaine.

Dans la norme RFC 1034, les "données DNS" peuvent notamment représenter une adresse IP (initiales des mots anglais "*Internet Protocol')* d'un domaine, un texte, ou n'importe quel champ associé à un domaine.

Malheureusement, l'architecture DNS présente certaines failles de sécurité.

Par exemple, lorsqu'un utilisateur souhaite effectuer une transaction bancaire et se connecte à un site Web, il n'est nullement assuré d'être effectivement connecté au site désiré, plutôt qu'à un site pirate qui chercherait à obtenir ses informations bancaires de manière frauduleuse.

l'IETF a défini dans les normes RFC 4033, 4034 ,4035 et notamment le document WEILER S: "Clarifications and Implementation Notes for DNSSECbis; draft-ieft-dnsext-dnssec-bis-updates-01.txt" IEFT STANDARD-WORKING-DRAFT, INTERNET INGINEERING TASK FORCE, 23 mai 2005 une extension sécurisée du protocole DNS nommée « DNSSEC ». En reprenant le scénario précédent, le protocole DNSSEC garantit notamment à l'utilisateur qu'il est effectivement connecté au site Web désiré.

Plus précisément, le protocole DNSSEC garantit l'intégrité des données DNS grâce au chiffrement de ces dernières par l'intermédiaire de signatures.

Ainsi un domaine, géré par un serveur de noms de domaines, est caractérisé par un couple clé publique/clé privée, ce couples de clés de signature étant désigné par « ZSK » (Initiales des mots anglais "*Zone Signing Key*") ; nous noterons respectivement ZSK[pu] et ZSK[pr] les composantes publique et privée de ce couple. Un utilisateur ayant présenté une requête selon le protocole DNSSEC auprès d'un serveur DNS aux fins d'obtenir une donnée DNS (que nous désignerons de manière générique par "RR DATA"), reçoit en retour de la part du serveur ladite donnée RR DATA demandée, ainsi que la valeur de la signature de RR DATA effectuée à l'aide de cette clé privée ZSK[pr].

Un utilisateur peut notamment présenter une requête de type "KEY". Dans ce cas, il obtient comme décrit précédemment la clé ZSK[pu] en clair, ainsi que sa valeur de signature effectuée au moyen de ZSK[pr] ; mais en outre, l'utilisateur obtient la composante publique, que nous nommerons KSK[pu], d'une paire de clés désignées par KSK (initiales des mots anglais "*Key Signing Key*"), ainsi que la valeur de signature des clés ZSK[pu] et KSK[pu] effectuée au moyen de la composante privée KSK[pr] de cette paire de clés KSK. En interrogeant le domaine "père" du domaine concerné, l'utilisateur peut authentifier cette clé KSK[pu], et par suite authentifier la clé ZSK[pu] qui lui permet, au final, de vérifier la signature de toute donnée DNS du domaine concerné.

Le protocole DNSSEC établit ainsi une chaîne de confiance dans la hiérarchie des domaines.

Les mises en oeuvre classiques de ce protocole présentent l'inconvénient que l'opération de signature de toutes les données DNS d'un domaine donné est une tâche coûteuse en termes de ressources pour le gestionnaire du domaine. De plus, lors d'un renouvellement d'une paire de clés ZSK, les signatures de l'ensemble des données signées avec ZSK[pr] doivent être également renouvelées, ce qui est très coûteux en temps de calcul.

### Objet de l'invention

L'invention propose une solution pour alléger et faciliter le calcul des signatures des données gérées par un serveur de noms de domaine.

A cet effet, elle vise, selon un premier aspect, un serveur de domaine dans un réseau de télécommunications, adapté à gérer les requêtes DNSSEC relatives audit domaine, comportant des moyens pour recevoir, en provenance d'un dispositif client, une requête visant à obtenir une donnée DNS de ce domaine.

Ce serveur comporte :
- un fichier de zone comportant au moins une règle de répartition définissant une partition dudit domaine en une pluralité de sous-zones, les données DNS de chacune de ces sous-zones étant associées à une paire de clés, dites « clés de partition », propres à cette sous-zone ;
- des moyens pour obtenir, à partir dudit fichier de zone, une information utile suffisante pour identifier la paire de clés de partition associée à la donnée DNS recherchée ; et
- des moyens pour envoyer audit dispositif client, en réponse à ladite requête :
   ● la donnée DNS recherchée,
   ● la valeur de signature de cette donnée effectuée au moyen de la composante privée de ladite paire de clés de partition associée, et
   ● ladite information utile.

De manière générale, on parle de zone pour désigner l'ensemble des données hébergées au sein d'un serveur, et de domaine pour désigner l'entité logique. Néanmoins, les termes "zone" et "domaine" sont souvent interchangeables dans la littérature.

Le serveur de noms selon l'invention permet donc de partitionner un domaine en sous-zones, un couple de clés étant attribué à chaque sous-zone, de façon indépendante.

En particulier des clés de longueurs différentes peuvent être attribuées aux différentes partitions. Ainsi les données associées à des domaines plus sensibles peuvent être signées avec des clés plus longues, au détriment du temps de calcul nécessaire à la signature.

Ces partitions peuvent être ou ne pas être localisées physiquement sur le même serveur.

Grâce à l'invention, la gestion d'une zone peut être déléguée à plusieurs entités administratives différentes, à qui il revient d'assurer le choix des clés utilisées pour signer les données ainsi que les règles de renouvellement pour chaque sous-zone. L'état de l'art actuel prévoit l'utilisation de plusieurs clés de signature au sein d'une zone, et on précise dans chaque signature la clé utilisée. Avec l'invention, on peut partitionner la zone en sous-zones gérées, en ce qui concerne les opérations de signature, de manière indépendante, en allégeant la tâche du serveur principal. Le serveur DNS selon l'invention établit alors une chaîne de confiance avec sa partition (ce qui est d'autant plus indispensable que les clés se trouvent parfois ailleurs que sur le serveur DNS). Lors des opérations de mise à jour des clés, on peut connaître directement les champs dont la signature doit être renouvelée sans avoir à examiner toutes les données du fichier de zone.

Le coeur de l'invention réside plus notamment dans le fichier de zones lu par le serveur. Aussi, l'invention vise, selon un deuxième aspect, une structure de données constituée par un fichier informatique susceptible d'être lu par un serveur de domaine dans un réseau de télécommunications.

Ce fichier informatique comporte au moins une règle de répartition définissant une partition dudit domaine en une pluralité de sous-zones, les données DNS de chacune de ces sous-zones étant associées à une paire de clés, dites « clés de partition », propres à cette sous-zone, ladite règle de répartition permettant d'obtenir une information utile et suffisante pour identifier quelle paire de clés de partition est associée à une donnée quelconque choisie parmi lesdites données DNS du domaine.

En pratique, l'administrateur d'une zone définit une partition logique de cette zone, ce qui revient à répartir les sous-zones du domaine en différents groupes, chaque groupe étant caractérisé par les clés de chiffrement de ses données.

Aussi, le fichier informatique selon l'invention comprend principalement une liste des identifiants des couples de clés de signatures, et une règle de répartition permettant d'identifier un couple de clés associé à la donnée DNS recherchée.

L'information utile renvoyée par le serveur pour rediriger son client peut être de différents types.

Par exemple, elle peut au moins comporter un élément parmi :
- la composante publique de ladite paire de clés de partition associée, et
- ladite au moins une règle de répartition, avec les composantes publiques de l'ensemble des clés de partition.

Si par exemple l'information utile est constituée par la règle de répartition, le dispositif client, ou son administrateur, doit interpréter la règle de répartition pour déterminer le couple de clés dont la composante privée a été utilisée pour signer les données.

Aussi, et plus généralement, selon un troisième aspect, l'invention vise aussi un système informatique client d'un serveur de noms de domaine dans un réseau de télécommunications, comportant des moyens pour envoyer au serveur une requête DNSSEC visant à obtenir une donnée DNS de ce domaine.

Ce système informatique comporte des moyens pour interpréter une information utile reçue en réponse à ladite requête, cette information utile lui permettant d'identifier quelle clé parmi une pluralité de clés, dites « clés de partition publique », correspond à une clé privée qui a été utilisée pour signer la donnée DNS recherchée.

Dans un mode préféré de réalisation, la règle de répartition permettant d'identifier le couple de clés est une expression régulière.

On rappelle que, de façon connue, une expression régulière peut être définie comme une ligne de code informatique commandant la recherche d'un motif (*"pattern*" en anglais) au sein d'une chaîne de caractères.

Selon des dispositions particulières, le serveur de noms de domaines comporte des moyens pour interpréter l'expression régulière, obtenir la clé publique adéquate et l'envoyer au dispositif client.

Cette caractéristique particulièrement avantageuse facilite grandement la tâche des utilisateurs qui ne possèdent pas de dispositif client adapté à interpréter les expressions régulières.

Corrélativement, l'invention concerne un procédé de gestion des requêtes DNSSEC relatives à un domaine dans un réseau de télécommunications, comportant :
- une étape de réception, en provenance d'un dispositif client, d'une requête visant à obtenir une donnée DNS de ce domaine.

Ce procédé comporte également :
- une étape de lecture d'un fichier de zone comportant au moins une règle de répartition définissant une partition du domaine en une pluralité de sous-zones, les données DNS de chacune de ces sous-zones étant associées à une paire de clés, dites « clés de partition », propres à ladite sous-zone ;
- une étape d'obtention, à partir du fichier de zone, d'une information utile suffisante pour identifier la paire de clés de partition associée à la donnée DNS recherchée ; et
- une étape d'envoi au dispositif client, en réponse à ladite requête, de
   ● la donnée DNS recherchée,
   ● la valeur de signature de cette donnée effectuée au moyen de la composante privée de la paire de clés de partition associée, et
   ● l'information utile précitée.

L'invention vise aussi un procédé d'obtention d'une donnée DNS d'un domaine dans un réseau de télécommunications, ce procédé comportant une étape d'envoi d'une requête DNSSEC visant à obtenir la donnée DNS.

Ce procédé comporte également une étape pour interpréter une information utile reçue en réponse à la requête précitée, cette interprétation lui permettant d'identifier quelle clé parmi une pluralité de clés, dites « clés de partition publique », correspond à une clé privée qui a été utilisée pour signer la donnée DNS recherchée.

Selon une mise en oeuvre préférée, les différentes étapes du procédé de gestion et du procédé d'obtention sont déterminées par des instructions de programmes d'ordinateurs.

En conséquence, l'invention vise aussi des programmes d'ordinateur sur un support d'informations, ces programmes étant susceptibles d'être mis en oeuvre dans un ordinateur, dans un serveur de noms de domaines ou dans un dispositif client, ces programmes comportant des instructions adaptées à la mise en oeuvre d'un procédé de gestion de noms de domaines ou d'un procédé d'obtention de donnée tels que mentionnés brièvement ci-dessus.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou un serveur de noms de domaines, et comportant des instructions d'au moins un programme d'ordinateur tels que mentionnés ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ("*floppy disc*" en anglais) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux annexes et dessins qui en illustrent un exemple de réalisation dépourvu de tout caractère limitatif et dans lesquels :
- l'annexe 1 représente, de façon connue, les principales lignes d'un fichier de zone d'un serveur de noms de domaines père conformément au protocole DNSSEC ;
- les annexes 2-1 et 2-2 représentent les principales lignes d'un fichier de zone d'un serveur de noms de domaines fils conforme à l'invention dans un mode préféré de réalisation ;
- la figure 1, déjà décrite, représente un exemple d'une arborescence de domaines DNS connue de l'homme du métier ;
- la figure 2 représente un réseau de télécommunications comportant un serveur de noms de domaines père et un serveur fils conforme à l'invention dans un mode préféré de réalisation ;
- la figure 3 représente, sous forme d'organigramme, les principales étapes d'un procédé de gestion de noms de domaines conforme à l'invention dans un mode préféré de réalisation ; et
- la figure 4 représente, sous forme d'organigramme, les principales étapes d'un procédé d'obtention d'une donnée DNS conforme à l'invention dans un mode préféré de réalisation.

### Description détaillée d'un mode de réalisation

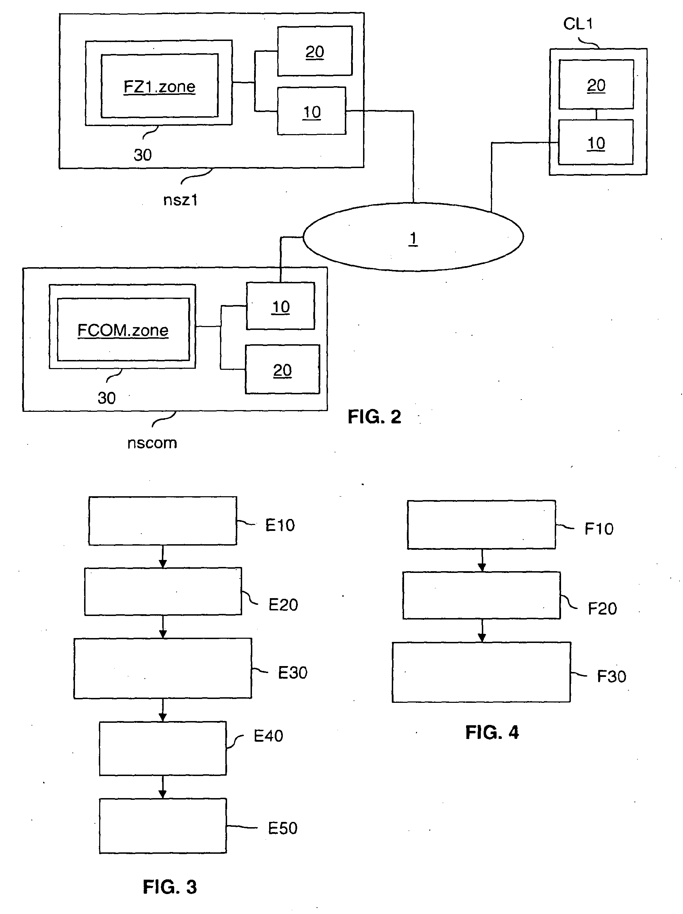

La **figure 2** représente un réseau de télécommunications 1 auquel sont connectés un serveur de noms de domaines nscom gérant une zone .com, un serveur de noms de domaines nsz1, gérant la zone z1.com et un dispositif client CL1 susceptible d'envoyer une requête à l'un ou l'autre de ces serveurs de noms de domaines pour obtenir une donnée DNS RR DATA associée à un domaine.

Pour le client CL1 et pour chacun des serveurs de noms de domaines nscom et nsz1, on a représenté à la figure 2 des moyens 10 pour recevoir et envoyer des données sur le réseau de télécommunications 1, ces moyens étant par exemple constitués par une carte réseau associée à des pilotes gérant le protocole http (initales des mots anglais "*HyperText Transfer Protocol'),* et des moyens 20 de traitement classiques d'un ordinateur, à savoir notamment un processeur, une mémoire contenant des programmes informatiques, et une mémoire vive pour stocker temporairement les variables nécessaires d'exécution de ces programmes.

Les moyens 20 de traitement du serveur fils nsz1 sont adaptés à exécuter les instructions d'un programme d'ordinateur mettant en oeuvre les principales étapes E10 à E50 du procédé de gestion conforme à l'invention représenté à la **figure 3**.

De même, les moyens 20 de traitement du dispositif client CL1 sont adaptés à exécuter les instructions d'un programme d'ordinateur mettant en oeuvre les principales étapes F10 à F30 du procédé d'obtention de donnée conforme à l'invention représenté à la **figure 4**.

Nous allons supposer que le client CL1 envoie (étape F10), en utilisant les moyens de communication 10, une requête au serveur de noms de domaines nscom d'adresse IP 10.193.161.50 pour obtenir une donnée RR DATA du domaine machine.z1.com. Ce domaine machine.z1.com se trouve faire partie d'une sous-zone au sens de l'invention, appelée "p1" (voir **annexe 2-2**, ligne 25), mais on notera que le client CL1 n'a pas à le savoir lorsqu'il formule sa requête.

Cette requête peut par exemple être du type :
dig @10.193.161.50 +norecurse machine.z1.com,
dig (initiales des mots anglais "*Domaine Information Groper*") étant l'outil connu de l'homme du métier pour interroger les serveurs de noms de domaines dans l'architecture DNS.

Cette requête est reçue à l'étape E10 par les moyens 10 de réception du serveur de noms de domaines nscom.

L'homme du métier reconnaîtra que puisque la commande dig ne comporte pas de type, cela signifie que la donnée recherchée par le client est une donnée de type A, à savoir l'adresse IP du domaine machine.z1.com.

Après l'étape E10 de réception de la requête du client CL1, les moyens 20 de traitement de noms du serveur nscom sont adaptés à lire, au cours d'une étape E20, le fichier de zone FCOM.zone (conforme au protocole DNSSEC) qui définit la gestion de la zone ".com" par ce serveur nscom.

Ce fichier de zone FCOM.zone peut par exemple être mémorisé dans une mémoire 30 du serveur nscom. Il peut aussi être mémorisé dans une autre machine.

Les principales lignes de ce fichier de zone FCOM.zone sont données à l'**annexe 1**.

Plus précisément, nous étudierons la chaîne de confiance du domaine ".com" au sous-domaine "z1.com".

L'homme du métier reconnaîtra que les couples de clés utilisées pour signer les données du domaine ".com" sont respectivement ZSK_com et KSK_com. Ainsi, et de façon connue, la clé privée du couple ZSK_com est utilisée pour signer l'ensemble des champs RR SET hébergés par le serveur nscom.

En particulier, la ligne L5 comporte entre crochets la valeur de la signature du champ SOA avec la clé privée du couple ZSK_com. Pour ne pas surcharger cette annexe, les signatures ont été remplacées par "...".

De façon connue, le champ de type SOA (initiales des mots anglais "*Start Of Authority*") contient des informations relatives à la gestion du fichier de zone hébergé par le serveur, telles que les coordonnées de l'administrateur du serveur et des paramètres de mise à jour du fichier de zone.

De façon connue, le champ DS en ligne L16 de l'annexe 1 permet d'effectuer un lien entre le domaine ".com" et un domaine fils, de manière à assurer une continuité dans la chaîne de sécurité DNSSEC.

Dans l'exemple décrit ici, on a appelé " [KSK_z1]" (voir ligne L16) le résultat de la fonction de hachage de la clé publique du couple KSK_z1 du domaine fils "z1.com". Toutes lés données au sein du domaine .com, et en particulier celles de type DS (voir ligne L17), sont signées par la clé privée du couple ZSK_com.

Le client CL1 cherchant à obtenir l'adresse IP du domaine machine.z1.com, le serveur de noms nscom, ne connaissant pas la réponse, lui transmet, en réponse à cette requête, le nom du serveur de noms de domaines gérant le domaine z1.com (à savoir nsz1.z1.com), ainsi que l'adresse IP de ce serveur (à savoir l'adresse IP 10.193.161.73) et les signatures correspondant aux données de type A (désignant le type "adresse IP") et NS (désignant le type "nom de serveur de noms de domaines"), cette signature ayant été effectuée en utilisant la clé privée du couple ZSK_com (voir lignes L12 à L15).

Le dispositif client CL1 obtient donc (étape F20) cette adresse IP et peut s'assurer de son intégrité après déchiffrement des données signées au moyen de la clé publique du couple ZSK_com. L'enregistrement DS (voir lignes L16 et L17) lui permet de connaître le "*hasH*" (condensé) de la composante publique de la paire KSK_z1. L'intégrité de l'enregistrement DS est assurée grâce à la vérification de la signature produite à l'aide de la composante privée de la paire ZSK_com.

Le dispositif client CL1 envoie ensuite une requête (étape F10 à nouveau) au serveur de noms de domaines d'adresse IP 10.193.161.73 (à savoir le serveur nsz1) pour obtenir l'adresse IP du domaine machine.z1.com.

Le client obtient la composante publique de la paire KSK_z1, ce qui lui permet de vérifier que son "hash" est identique au "hash" obtenu précédement dans le champ DS. La composante publique de la paire ZSK_z1 est signée avec la composante privée de la paire KSK_z1, ce qui permet d'établir la chaîne de confiance.

Cette requête est reçue à l'étape E10 par les moyens 10 de réception du serveur de noms de domaines nsz1.

Après l'étape E10 de réception de cette requête, les moyens 20 de traitement de nom du serveur nsz1 lisent, au cours de l'étape E20, le fichier FZ1.zone qui définit la gestion de la zone z1.com par le serveur nsz1.

Les principales lignes de ce fichier de zone FZ1.zone sont données aux **annexes 2-1 et 2-2**.

Comme mentionné précédemment, l'invention permet de créer des sous-zones du domaine z1.com, chaque sous-zone étant associée à un couple de clés de signature.

Pour cela, on utilise une règle de répartition qui, dans cet exemple, spécifie que :
- les données appartenant à des sous-zones dont la première lettre du nom est comprise entre "a" et "m" doivent être signées par un premier couple de clés ; et
- les données appartenant à des sous-zones dont la première lettre du nom est comprise entre "n" et "z" doivent être signées par un deuxième couple de clés.

Pour cela, dans le mode de réalisation décrit ici, on utilise (voir ligne L10) un champ KEY, car ce sont les premières informations recherchées par le client DNSSEC CL1.

Dans l'exemple décrit ici, on utilise les champs "ALGO" et "TYPE" du champ KEY pour établir qu'il s'agit d'une répartition de clés.

De cette manière, le client CL1 est directement informé de la présence d'une règle de répartition.

On pourrait également en variante utiliser un nouveau type.

On notera qu'à la ligne L10 de l'annexe 2-1, le type KEY est suivi d'un numéro de référence qui permet de distinguer lé type de clé. Nous avons pris la valeur 230 qui n'est pas encore attribuée. Les champs suivants sont les champs "Protocole" et "Algorithme". On peut convenir d'une valeur signifiant qu'ils ne doivent pas être pris en compte, ou spécifiant la nature du champ (nom de domaine, argument, et ainsi de suite).

L10 indique une référence vers la règle de répartition du domaine. Il est à noter que cette référence peut être mise en oeuvre de plusieurs manières dans les champs NAPTR. Ainsi on peut supposer que la règle soit référencée par un nom de domaine comme dans le cas ci-dessous :

```
   Kr   IN   NAPTR   101   50   «   »   «srv»   "!^[a-m]!key.z1.com" ,
```

ou bien que la règle soit référencée comme l'argument d'une fonction indiquée dans le champ service :

```
           IN   NAPTR   101   50   « »   «srv!kr!»   "!^[a-m]!key.z1.com" ,
```

ou bien référencée dans le champ regexp :

```
           IN   NAPTR   101   50   « »   «srv»   "!^"[a-m]!kr:key.z1.com" ,
```

Ces choix sont indépendants de l'invention. Ils peuvent être déterminés par des instances de normalisation ou par l'usage.

Quoi qu'il en soit, ce champ KEY doit comporter une indication qui permet d'indiquer que la clé ne se trouve pas directement dans ses champs, mais que l'on doit procéder à l'interrogation d'un autre nom de domaine, à savoir dans notre exemple le domaine kr.z1.com (voir ligne L10).

Le fait de placer une référence autre qu'une clé dans un champ KEY constitue un élément caractéristique d'un fichier de zone conforme à l'invention.

Dans l'exemple décrit ici, la règle de répartition est donnée aux lignes L13 à L15 du fichier FZ1.zone.

Dans cet exemple, le premier champ NAPTR (ligne L13) indique que la règle de répartition ne s'applique pas pour le champ kr. De manière à appliquer cette règle en premier sur le nom de domaine, on place un ordre plus élevé (101) sur cette règle.

On peut également envisager d'indiquer directement la valeur de la clé KSK de la partition ou de l'identifiant de la clé.

Ainsi dans notre exemple, on considère que les informations relatives à l'ensemble du domaine sont soit kr.z1.com, soit z1.com.

Le reste de l'ensemble des noms de domaines commençant par une lettre est géré au sein d'une sous-zone propre.

En variante, on pourrait mentionner, dans les champs "ordre" et "préférence" des données de type NAPTR, un ensemble de trois clés KEY1, KEY2 et KEY3, et indiquer au client d'utiliser d'abord KEY1, puis KEY2, puis KEY3. Dans cette règle de répartition, le champ NAPTR est renseigné par le champ "srv" qui indique que les données mentionnées concernent le service de répartition.

Le champ "FLAG" doit par exemple être mis à "DS" pour indiquer que l'interrogation suivante porte sur un champ de type DS. Cette indication permet de lever les possibles ambiguïtés sur l'interprétation des données hébergées sous les champs de type NAPTR.

Par ailleurs, le champ DS doit comporter une indication dans ses champs "TYPE" ou "ALGO" pour mentionner qu'il s'agit d'une délégation vers une partition et non vers un sous-domaine (voir lignes L17 et L18).

Dans un mode préféré de réalisation décrit ici, les moyens 10 de traitement du serveur nsz1 sont adaptés à interpréter (étape E30) les expressions régulières des lignes L13 à L15 pour obtenir, à partir du nom de domaine machine.z1.com, le couple de clés KSK_p1/ZSK_p1 dont les composantes privées ont été utilisées pour signer les données RR DATA de cette sous-zone.

Les moyens de traitement 10 du serveur nsz1 sont adaptés à obtenir, au cours d'une étape E40, une information utile pour identifier ce couple de clés.

Cette information utile peut être de différents types.

Elle peut par exemple comporter la règle de répartition (L13-L15) ainsi que la référence à la règle de répartition contenue dans le champ KEY de la ligne L10.

Une réponse comportant l'information utile obtenue au cours des étapes E30 et E40 est envoyée, au cours d'une étape E50, par le serveur de noms nsz1 au client CL1.

Le client CL1 reçoit cette réponse au cours d'une étape F20.

Par exemple, la réponse à la requête dig mentionnée ci-dessus peut prendre la forme suivante :

```
 ; <<>> dig 9.3.1 <<>> machine.z1.com
 ;; global options: printcmd
 ;; Got answer:
 ;; ->>HEADER<<- opcode: QUERY, status: NOERROR, id: 61020
 ;; flags: qr rd ra; QUERY: 1, ANSWER: 5, AUTHORITY: 4, ADDITIONAL: 3
 ;; QUESTION SECTION:
 ;machine.z1.com.      IN      A
 ;; ANSWER SECTION:
 machine.z1.com        IN      A      10.193.161.74
 ;; AUTHORITY SECTION:
 z1.com.       2910    IN      NS     nsz1.net.
 ;; ADDITIONAL SECTION:
 nsz1.net.    281    IN    A    213.193.20.11
 IN KEY 230              x    x [kr.z1.com] ;
 IN KEY 256              3    5    [...]    ; key id ZSK_com
 IN KEY 257              3    5    [...]    ; key id KSK_com
 IN SIG KEY(ZSK_com) [...]       #signature avec KSK_com
 IN SIG KEY (KSK_com) [...]      #signature avec ZSK_com
 Kr    IN    NAPTR    101    50    « »    «srv»    "!^[kr|NULL].Z1.com.!.z1.com"
       IN    NAPTR    100    50    «DS»    «srv»    "!^[a-m].z1.com.!a-keys-p1.z1.com"
       IN    NAPTR    100    50    «DS»    «srv»    "!^[n-z].z1.com.!n-keys-p1.z1.com"
       IN    SIG    NAPTR [...]           #signature avec ZSK_z1
    IN    DS    id_KSK_p1 [...]    #hash de la KSK pour partition p1 de z1
    IN    DS    id_KSK_p2 [...]    #hash de la KSK pour partition p2 de z1
    IN    SIG    DS [...]          #signature avec ZSK_z1
    a-keys-p1    IN    KEY    256                3    5 [...] ; key id_ZSK_p1
    a-keys-p1    IN    KEY    257                3    5 [...] ; key id_KSK_p1
    a-keys-p1   IN     SIG    KEY (id_ZsK_p1) [...]             #signature avec KSK_p1
    a-keys-p1   IN     SIG    KEY (id_KSK_p1) [...]             #signature avec ZSK_p1
    ;; Query time: 33 msec
    ;; SERVER: 10.193.117.254#53(10.193.117.254)
    ;; WHEN: Fri Apr 22 18:30:00 2005
    ;; MSG SIZE rcvd: 304
```

Dans le mode préféré de réalisation décrit, les moyens de traitement 20 du dispositif client CL1 sont adaptés à interpréter (étape F30), le cas échéant, la règle de répartition L13 à L15 contenue dans la réponse.

En l'espèce, le dispositif client CL1 détermine grâce à cette interprétation que le couple de clés utilisé pour signer l'adresse IP du domaine machine.z1.com est le couple ZSK_p1/KSK_p1.

Quoi qu'il en soit, lors de la réception d'une requête sur la zone z1.com, le client CL1 doit être informé de la présence d'une partition.

Pour ce faire, soit ce client CL1 interroge le nom de domaine "z1.com" avec le type ANY, soit le serveur renvoie à la réception d'un nom de domaine "machine.z1.com" une réponse comportant un champ additionnel avec les données NS, KEY, NAPTR liées à la règle de répartition DS et éventuellement les différentes clés de partition.

Ces différentes données sont à chaque fois optionnelles, mais elles permettent d'éviter de nombreuses interrogations.

Dans l'exemple décrit ici, la règle de répartition se présente sous la forme d'une expression régulière, mais d'autres règles, qui ne portent par,exemple pas uniquement sur la syntaxe du nom du domaine, peuvent être utilisées.

On notera enfin que la règle de répartition peut être localisée dans un autre domaine.

### ANNEXE 1

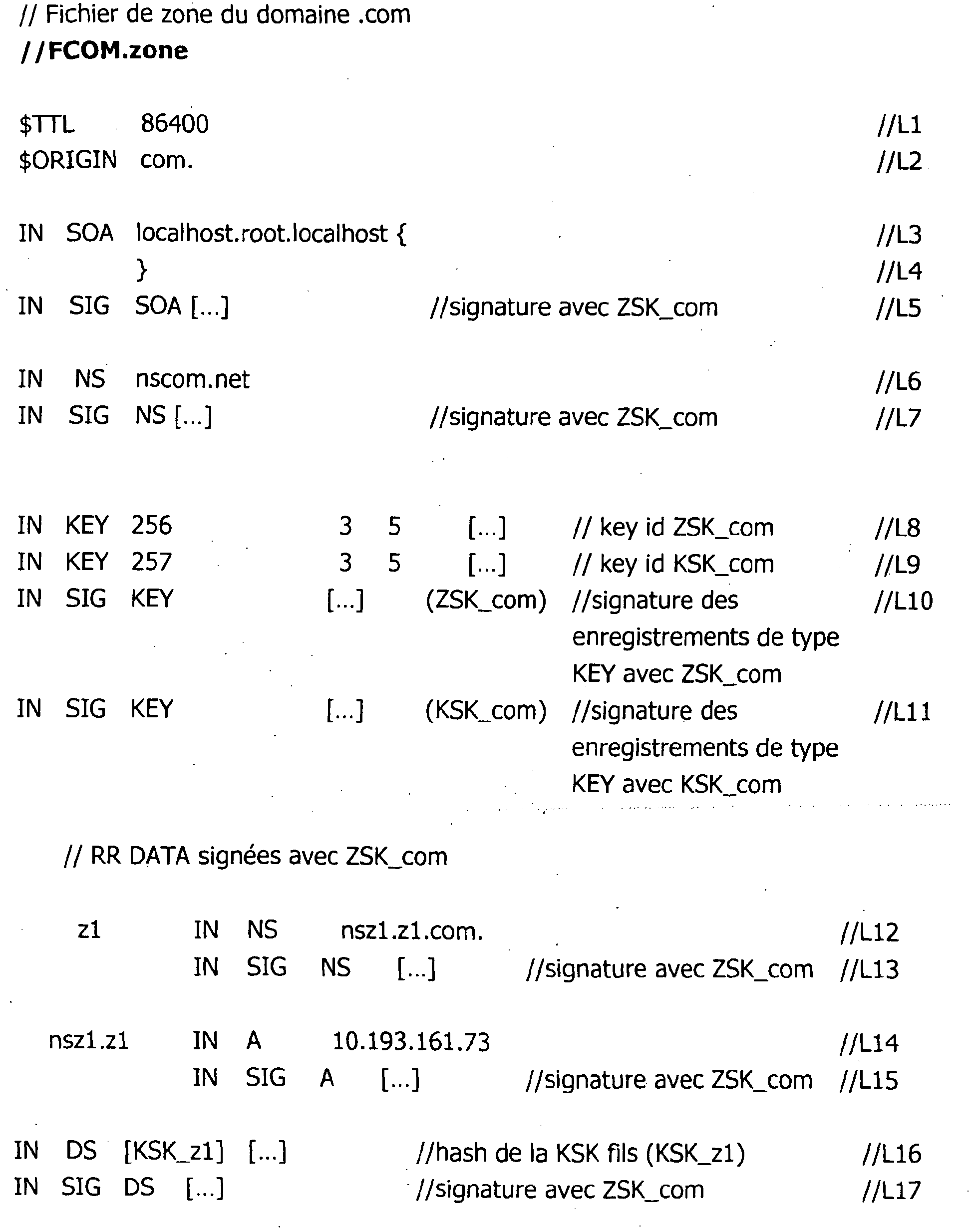

### ANNEXE 2-1

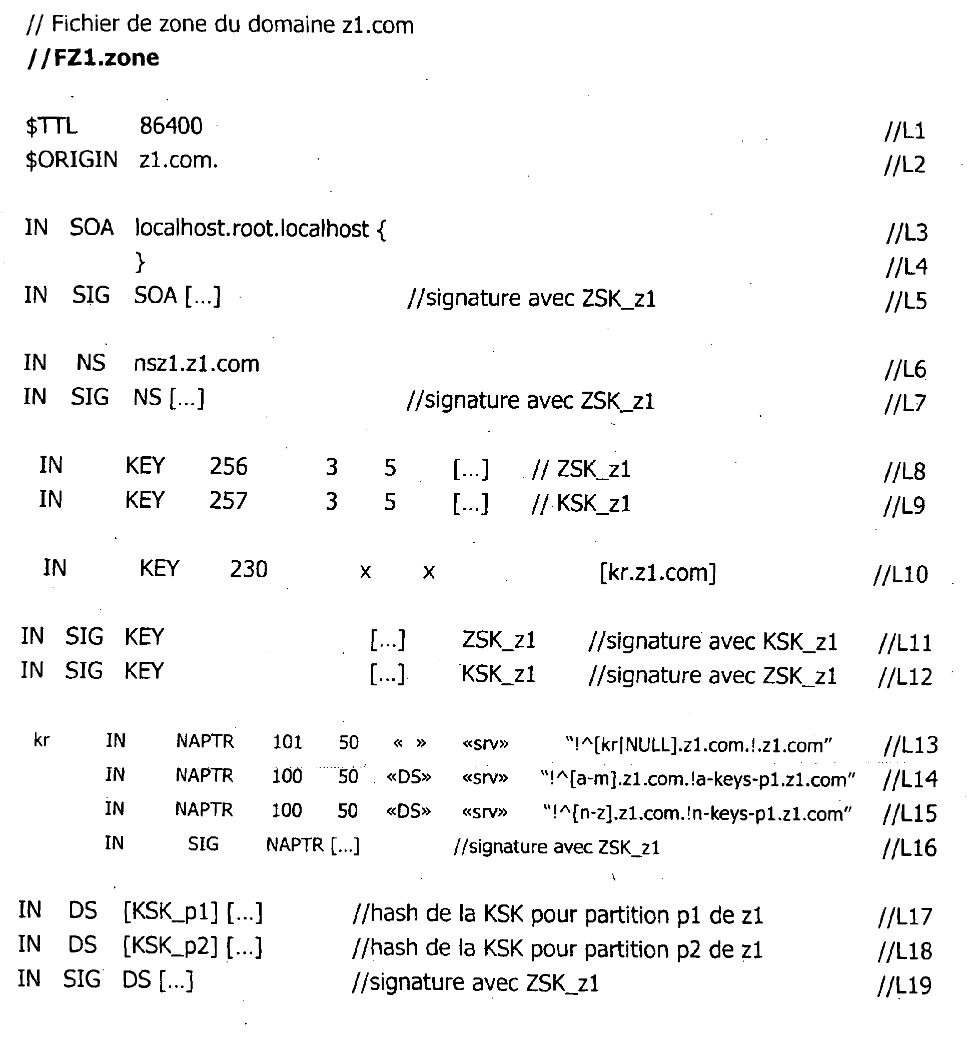

### ANNEXE 2-2

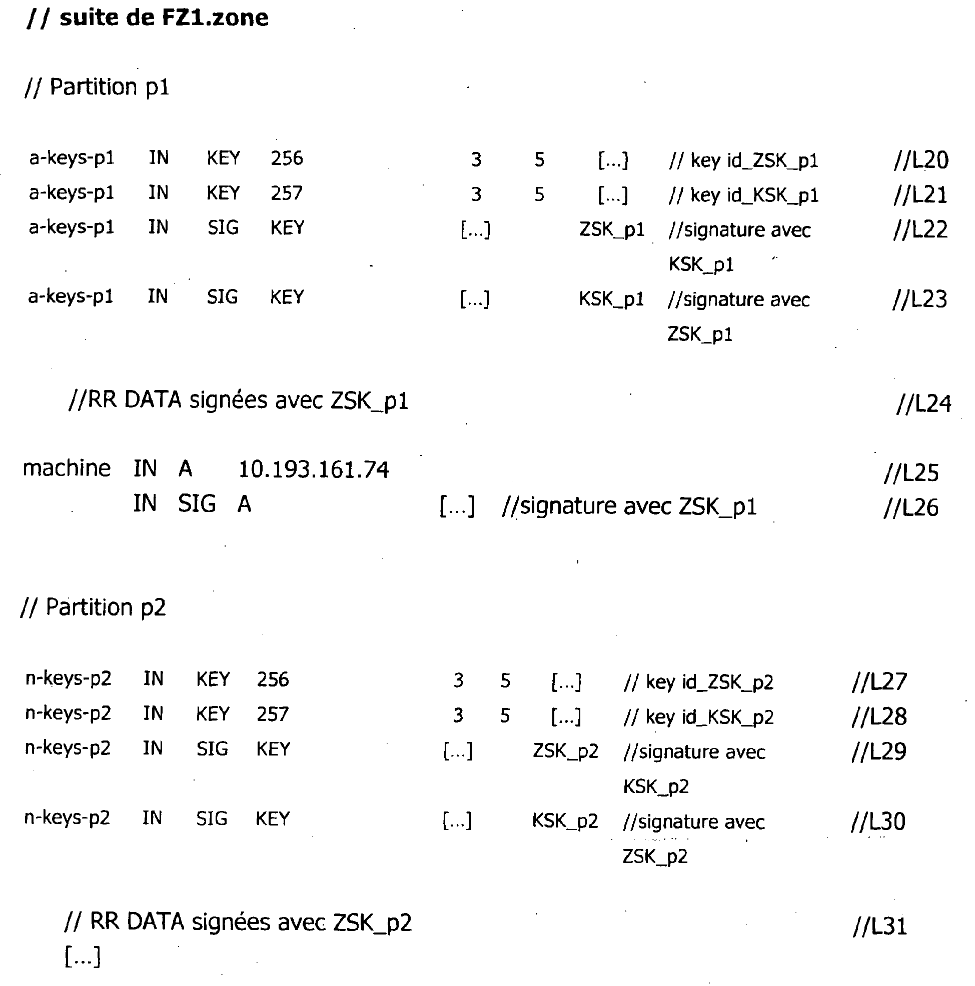

## Revendications

1. Serveur (nsz1) de domaine dans un réseau (1) de télécommunications, adapté à gérer les requêtes DNSSEC relatives audit domaine , comportant des moyens (10) pour recevoir, en provenance d'un dispositif client (CL1), une requête visant à obtenir une donnée DNS de ce domaine et des moyens (10) pour envoyer audit dispositif client (CL1), en réponse à ladite requête; une reponse comportant latide donnée DNS recherchée. Ledit serveur étant **caractérisé en ce qu'**il comporte :
- un fichier de zone comportant au moins une règle de répartition définissant une partition dudit domaine en une pluralité de sous-zones, les données DNS de chacune desdites sous-zones étant associées à une paire de clés, dites « clés de partition », propres à ladite sous-zone; et
- des moyens (20) pour obtenir, à partir dudit fichier de zone , une information utile suffisante pour identifier la paire de clés de partition associée à ladite donnée DNS recherchée; et **en ce que** ladite réponse comporte en outre:
● la valeur de signature de cette donnée effectuée au moyen de la composante privée de ladite paire de clés de partition associée , et
● ladite information utile.

2. Serveur selon la revendication 1, **caractérisé en ce que** ladite information utile comporte au moins un élément parmi :
- la composante publique de ladite paire de clés de partition associée, et
- ladite au moins une règle de répartition, avec les composantes publiques de l'ensemble des clés de partition.

3. Serveur selon la revendication 1 ou la revendication 2, **caractérisé en ce que** ladite règle de répartition est une expression régulière permettant d'obtenir la composante publique de ladite paire de clés de partition associée.

4. Fichier informatique susceptible d'être lu par un serveur (nsz1) de domaine dans un réseau (1) de télécommunications, **caractérisé en ce qu'**il comporte au moins une règle de répartition définissant une partition dudit domaine en une pluralité de sous-zones, les données DNS de chacune desdites sous-zones étant associées à une paire de clés, dites «clés de partition », propres à ladite sous-zone, ladite règle de répartition permettant d'obtenir une information utile et suffisante pour identifier quelle paire de clés de partition est associée à une donnée quelconque choisie parmi lesdites données DNS du domaine.

5. Procédé de gestion des requêtes DNSSEC relatives à un domaine dans un réseau (1) de télécommunications, comportant :
- une étape (E10) de réception, en provenance d'un dispositif client (CL1), d'une requête visant à obtenir une donnée DNS de ce domaine une étape (E50) d'envoi audit dispositif client (CL1), en réponse à ladite requête, une réponse comportant ladite donnée DNS recherchée, ledit procédé étant **caractérisé en ce qu'**il comporte également :
- une étape (E20) de lecture d'un fichier de zone comportant au moins une règle de répartition définissant une partition dudit domaine en une pluralité de sous-zones, les données DNS de chacune (p2) desdites sous-zones étant associées à une paire de clés, dites « clés de partition », propres à ladite sous-zone;
- une étape d'obtention (E30, E40), à partir dudit fichier de zone, d'une information utile suffisante pour identifier la paire de clés de partition associée à ladite donnée DNS recherchée ; et et **en ce que** ladite réponse comporte en outre:
● la valeur de signature de cette donnée effectuée au moyen de la composante privée de ladite paire de clés de partition associée, et
● ladite information utile.

6. Procédé de gestion des requêtes DNSSEC selon la revendication 5, **caractérisé en ce que** ladite information utile comporte au moins un élément parmi :
- la composante publique de ladite paire de clés de partition associée, et
- ladite au moins une règle de répartition, avec les composantes publiques de l'ensemble des clés de partition.

7. Programme d'ordinateur comportant des instructions pour l'exécution des étapes du procédé de gestion des requêtes DNSSEC selon la revendication 5 ou la revendication 6 lorsque ledit programme est exécuté par un ordinateur.

8. Support d'enregistrement lisible par un ordinateur sur lequel est enregistré un programme d'ordinateur comprenant des instructions pour l'exécution des étapes du procédé de gestion des requêtes DNSSEC selon la revendication 5 ou la revendication 6.

9. Système informatique client (CL1) d'un serveur (nsz1) de noms de domaine dans un réseau (1) de télécommunications, comportant des moyens (10) pour envoyer (F10) audit serveur (nsz1) une requête DNSSEC visant à obtenir une donnée DNS de ce domaine, **caractérisé en ce qu'**il comporte des moyens (10) de réception, en réponse à ladite requête, d'une information utile comportant une règle de répartition définissant une partition dudit domaine en une pluralité de sous-zones, les données DNS de chacune desdites sous-zones étant associées à une paire de clés , cette paire étant constituée par une clé dite de "partition publique" et une clé privée, et des moyens (20) pour interpréter ladite information utile de façon à identifier ladite clé de partition publique, correspondant à la clé privée qui a été utilisée pour signer ladite donnée DNS recherchée.

10. Procédé d'obtention d'une donnée DNS d'un domaine dans un réseau (1) de télécommunications, ce procédé comportant une étape d'envoi (F10) d'une requête DNSSEC visant à obtenir ladite donnée DNS, ce procédé étant **caractérisé en ce qu'**il comporte également :
- une étape (F20) de réception, en réponse à ladite requête, d'une information utile comportant une règle de répartition définissant une partition dudit domaine en une pluralité de sous-zones , les données DNS de chacune desdites sous-zones étant associées à une paire de clés, cette paire étant consituée par une clé dite de "partition publique" et une clé privée; et
- une étape (F30) d'interprétation de ladite information utile, de façon à identifier ladite clé de partition publique correspondant à la clé privée qui a été utilisée pour signer ladite donnée DNS recherchée.

11. Programme d'ordinateur comportant des instructions pour l'exécution des étapes du procédé d'obtention d'une donnée DNS selon la revendication 10, lorsque ledit programme est exécuté par un ordinateur.

12. Support d'enregistrement lisible par un ordinateur sur lequel est enregistré un programme d'ordinateur comprenant des instructions pour l'exécution des étapes du procédé d'obtention d'une donnée DNS selon la revendication 10.

## Claims

1. Domain server (nsz1) in a telecommunication network (1), suitable for managing DNSSEC requests relating to said domain, comprising means (10) for receiving, from a client device (CL1), a request aiming to obtain a DNS datum of this domain and means (10) for sending to said client device (CL1), in response to said request, a response including said sought DNS datum, said server being **characterized in that** it comprises:
- an zone file containing at least one distribution rule defining a partition of said domain into a plurality of sub-zones, the DNS data of each of said sub-zones being associated with a pair of keys, called "partition keys", specific to said sub-zone; and
- means (20) for obtaining, from said zone file, useful information sufficient to identify the pair of partition keys associated with said sought DNS datum; and **in that** said response also includes:
● the signature value of this datum made by means of the private component of said associated pair of partition keys, and
● said useful information.

2. Server according to Claim 1, **characterized in that** said useful information includes at least one element from:
- the public component of said associated pair of partition keys, and
- said at least one distribution rule, with the public components of all the partition keys.

3. Server according to Claim 1 or Claim 2, **characterized in that** said distribution rule is a regular expression making it possible to obtain the public component of said associated pair of partition keys.

4. Computer file which can be read by a domain server (nsz1) in a telecommunication network (1), **characterized in that** it includes at least one distribution rule defining a partition of said domain into a plurality of sub-zones, the DNS data of each of said sub-zones being associated with a pair of keys, called "partition keys", specific to said sub-zone, said distribution rule making it possible to obtain useful information sufficient to identify which pair of partition keys is associated with any datum chosen from said DNS data of the domain.

5. Method for managing DNSSEC requests relating to a domain in a telecommunication network (1), comprising:
- a step (E10) of reception, from a client device (CL1), of a request aiming to obtain a DNS datum of this domain, a step (E50) of sending to said client device (CL1), in response to said request, a response including said sought DNS datum, said method being **characterized in that** it also comprises:
- a step (E20) of reading an zone file including at least one distribution rule defining a partition of said domain into a plurality of sub-zones, the DNS data of each (p2) of said sub-zones being associated with a pair of keys, called "partition keys", specific to said sub-zone;
- a step of obtaining (E30, E40), from said zone file, useful information sufficient to identify the pair of partition keys associated with said sought DNS datum; and **in that** said response also includes:
● the signature value of this datum made by means of the private component of said associated pair of partition keys, and
● said useful information.

6. Method for managing DNSSEC requests according to Claim 5, **characterized in that** said useful information includes at least one element from:
- the public component of said associated pair of partition keys, and
- said at least one distribution rule, with the public components of all the partition keys.

7. Computer program comprising instructions for the execution of the steps of the method for managing DNSSEC requests according to Claim 5 or Claim 6 when said program is run by a computer.

8. Computer-readable storage medium on which is stored a computer program comprising instructions for the execution of the steps of the method for managing DNSSEC requests according to Claim 5 or Claim 6.

9. Client computer system (CL1) of a domain name server (nsz1) in a telecommunication network (1), comprising means (10) for sending (F10) to said server (nsz1) a DNSSEC request aiming to obtain a DNS datum of this domain, **characterized in that** it comprises means (10) for receiving, in response to said request, useful information including a distribution rule defining a partition of said domain into a plurality of sub-zones, the DNS data of each said sub-zones being associated with a pair of keys, this pair being made up of a so-called "public partition" key and a private key, and means (20) for interpreting said useful information so as to identify said public partition key, corresponding to the private key which was used to sign said sought DNS datum.

10. Method for obtaining a DNS datum of a domain in a telecommunication network (1), this method comprising a step of sending (F10) a DNSSEC request aiming to obtain said DNS datum, this method being **characterized in that** it also comprises:
- a step (F20) of reception, in response to said request, of useful information including a distribution rule defining a partition of said domain into a plurality of sub-zones, the DNS data of each of said sub-zones being associated with a pair of keys, this pair being made up of a so-called "public partition" key and a private key; and
- a step (F30) of interpreting said useful information, so as to identify said public partition key corresponding to the private key which was used to sign said sought DNS datum.

11. Computer program comprising instructions for executing the steps of the method for obtaining a DNS datum according to Claim 10, when said program is run by a computer.

12. Computer-readable storage medium on which is stored a computer program comprising instructions for the execution of the steps of the method for obtaining a DNS datum according to Claim 10.

## Patentansprüche

1. Domain-Server (nsz1) in einem Telekommunikationsnetz (1), der die DNSSEC-Anforderungen bezüglich des Domains verwalten kann, der Einrichtungen (10), um von einer Client-Vorrichtung (CL1) eine Anforderung zu empfangen, die darauf abzielt, einen DNS-Datenwert dieses Domains zu erhalten, und Einrichtungen (10) aufweist, um an die Client-Vorrichtung (CL1) als Antwort auf die Anforderung eine Antwort zu senden, die den gesuchten DNS-Datenwert enthält, wobei der Server **dadurch gekennzeichnet ist, dass** er aufweist:
- eine Zonendatei, die mindestens eine Verteilungsregel aufweist, die eine Partitionierung des Domains in eine Vielzahl von Teilzonen definiert, wobei die DNS-Daten jeder der Teilzonen einem Paar von « Partitionierungsschlüssel » genannten Schlüsseln zugeordnet sind, die der Teilzone eigen sind; und
- Einrichtungen (20), um ausgehend von der Zonendatei eine Nutzinformation zu erhalten, die ausreicht, um das dem gesuchten DNS-Datenwert zugeordnete Paar von Partitionierungsschlüsseln zu identifizieren;
und dass die Antwort außerdem aufweist:
● den Signaturwert dieses Datenwerts, der mittels der privaten Komponente des zugeordneten Paars von Partitionierungsschlüsseln ausgeführt wird, und
● die Nutzinformation.

2. Server nach Anspruch 1, **dadurch gekennzeichnet, dass** die Nutzinformation mindestens ein Element aufweist von:
- der öffentlichen Komponente des zugeordneten Paars von Partitionierungsschlüsseln, und
- der mindestens einen Verteilungsregel mit den öffentlichen Komponenten der Gesamtheit der Partitionierungsschlüssel.

3. Server nach Anspruch 1 oder Anspruch 2, **dadurch gekennzeichnet, dass** die Verteilungsregel ein regulärer Ausdruck ist, der es ermöglicht, die öffentliche Komponente des zugeordneten Paars von Partitionierungsschlüsseln zu erhalten.

4. EDV-Datei, die von einem Domain-Server (nsz1) in einem Telekommunikationsnetz (1) gelesen werden kann, **dadurch gekennzeichnet, dass** sie mindestens eine Verteilungsregel aufweist, die eine Partitionierung des Domains in eine Vielzahl von Teilzonen definiert, wobei die DNS-Daten jeder der Teilzonen einem Paar von « Partitionierungsschlüssel » genannten Schlüsseln zugeordnet sind, die der Teilzone eigen sind, wobei die Verteilungsregel es ermöglicht, eine Nutzinformation zu erhalten, die ausreicht, um festzustellen, welches Paar von Partitionierungsschlüsseln einem beliebigen Datenwert zugeordnet ist, der aus den DNS-Daten des Domains ausgewählt wird.

5. Verfahren zur Verwaltung der DNSSEC-Anforderungen bezüglich eines Domains in einem Telekommunikationsnetz (1), das aufweist:
- einen Schritt (E10) des Empfangs, von einer Client-Vorrichtung (CL1), einer Anforderung, die darauf abzielt, einen DNS-Datenwert dieses Domains zu erhalten,
- einen Schritt (E50) des Sendens an die Client-Vorrichtung (CL1) als Antwort auf die Anforderung einer Antwort, die den gesuchten DNS-Datenwert enthält,
wobei das Verfahren **dadurch gekennzeichnet ist, dass** es ebenfalls aufweist:
- einen Schritt (E20) des Lesens einer Zonendatei, die mindestens eine Verteilungsregel aufweist, die eine Partitionierung des Domains in eine Vielzahl von Teilzonen definiert, wobei die DNS-Daten jeder (p2) der Teilzonen einem Paar von « Partitionierungsschlüssel » genannten Schlüsseln zugeordnet sind, die der Teilzone eigen sind;
- einen Schritt des Erhalts (E30, E40), ausgehend von der Zonendatei, einer Nutzinformation, die ausreicht, um das dem gesuchten DNS-Datenwert zugeordnete Paar von Partitionierungsschlüsseln zu identifizieren; und
dass die Antwort außerdem aufweist:
● den Signaturwert dieses Datenwerts, der mittels der privaten Komponente des zugeordneten Paars von Partitionierungsschlüsseln ausgeführt wird, und
● die Nutzinformation.

6. Verfahren zur Verwaltung der DNSSEC-Anforderungen nach Anspruch 5, **dadurch gekennzeichnet, dass** die Nutzinformation mindestens ein Element aufweist von:
- der öffentlichen Komponente des zugeordneten Paars von Partitionierungsschlüsseln, und
- der mindestens einen Verteilungsregel mit den öffentlichen Komponenten der Gesamtheit der Partitionierungsschlüssel.

7. Computerprogramm, das Anweisungen zur Ausführung der Schritte des Verwaltungsverfahrens der DNSSEC-Anforderungen nach Anspruch 5 oder Anspruch 6 aufweist, wenn das Programm von einem Computer ausgeführt wird.

8. Computerlesbarer Aufzeichnungsträger, auf dem ein Computerprogramm aufgezeichnet ist, das Anweisungen zur Ausführung der Schritte des Verwaltungsverfahrens der DNSSEC-Anforderungen nach Anspruch 5 oder Anspruch 6 enthält.

9. Client-EDV-System (CL1) eines Servers (nsz1) von Domainnamen in einem Telekommunikationsnetz (1), das Einrichtungen (10) zum Senden (F10) an den Server (nsz1) einer DNSSEC-Anforderung aufweist, die darauf abzielt, einen DNS-Datenwert dieses Domains zu erhalten, **dadurch gekennzeichnet, dass** es Einrichtungen (10) zum Empfang, als Antwort auf die Anforderung, einer Nutzinformation, die eine Verteilungsregel aufweist, die eine Partitionierung des Domains in eine Vielzahl von Teilzonen definiert, wobei die DNS-Daten jeder der Teilzonen einem Paar von Schlüsseln zugeordnet sind, wobei dieses Paars aus einem "öffentliche Partitionierung" genannten Schlüssel und einem privaten Schlüssel besteht, und Einrichtungen (20) aufweist, um die Nutzinformation zu interpretieren, um den öffentlichen Partitionierungsschlüssel zu identifizieren, der dem privaten Schlüssel entspricht, der benutzt wurde, um den gesuchten DNS-Datenwert zu signieren.

10. Verfahren zum Erhalt eines DNS-Datenwerts eines Domains in einem Telekommunikationsnetz (1), wobei dieses Verfahren einen Schritt (F10) des Sendens einer DNSSEC-Anforderung aufweist, die darauf abzielt, diesen DNS-Datenwert zu erhalten; wobei dieses Verfahren **dadurch gekennzeichnet ist, dass** es ebenfalls aufweist:
- einen Schritt (F20) des Empfangs, als Antwort auf die Anforderung, einer Nutzinformation, die eine Verteilungsregel aufweist, die eine Partitionierung des Domains in eine Vielzahl von Teilzonen definiert, wobei die DNS-Daten jeder der Teilzonen einem Paar von Schlüsseln zugeordnet sind; wobei dieses Paar aus einem Schlüssel genannt der "öffentlichen Partitionierung" und einem privaten Schlüssel besteht; und
- einen Schritt (F30) der Interpretation der Nutzinformation, um den öffentlichen Partitionierungsschlüssel zu identifizieren, der dem privaten Schlüssel entspricht, der benutzt wurde, um den gesuchten DNS-Datenwert zu signieren.

11. Computerprogramm, das Anweisungen zur Ausführung der Schritte des Verfahrens zum Erhalt eines DNS-Datenwerts nach Anspruch 10 enthält, wenn das Programm von einem Computer ausgeführt wird

12. Computerlesbarer Aufzeichnungsträger, auf dem ein Computerprogramm aufgezeichnet ist, das Anweisungen zur Ausführung der Schritte des Verfahrens zum Erhalt eines DNS-Datenwerts nach Anspruch 10 enthält.
